# EUROPEAN PATENT SPECIFICATION

(11) **EP 3 446 918 B1**
(45) Date of publication and mention of the grant of the patent: **24.11.2021**
(21) Application number: 17187593.3
(22) Date of filing: 23.08.2017
(51) Int. Cl.: B60N 2/28

(54) **METHOD AND SYSTEM FOR ACTIVATING A CHILD MODE IN AN AUTOMOBILE**
VERFAHREN UND SYSTEM ZUR AKTIVIERUNG EINES KINDERMODUS IN EINEM AUTOMOBIL
PROCÉDÉ ET SYSTÈME POUR ACTIVER UN MODE D'ENFANT DANS UNE AUTOMOBILE

(43) Date of publication of application: 27.02.2019
(73) Proprietor: Vestel Elektronik Sanayi ve Ticaret A.S., 45030 Manisa (TR)
(72) Inventor: ISLEK, Çaglar, 45030 Manisa (TR)
(74) Representative: Flint, Adam

(56) References cited:
- DE-A1- 19 922 720
- DE-A1-102015 207 805
- FR-A1- 2 750 094
- US-A1- 2013 073 148
- US-B1- 9 545 931
- US-B2- 6 924 742

## Description

### Technical Field

The present disclosure relates to a method and system for activating a child mode in an automobile.

### Background

Automobiles may provide for a number of different modes. These modes may be optimized for different types of driving. For example, a sports mode may be optimized for fast-paced driving while an 'eco-mode' may be optimized for fuel-efficient driving. In one type of mode, referred to as child mode, the automobile may be optimized for ensuring the safety of an infant passenger. This may involve, for example, detecting that an infant is sitting on a front passenger seat and preventing an airbag associated with that seat from inflating in the case of a collision and/or putting a driving mode of the automobile in a more sedate, less sporty mode. Known child modes are problematic in that the method used to detect the presence of an infant is often prone to error.

DE102015207805A1 discloses a system for detecting the seat occupancy of a motor vehicle seat by a person or a child seat which is based on the sensed extension length of an applied seat belt.

FR2750094A1 discloses a passenger airbag inhibiting device for use with a child seat in a vehicle comprising a measuring sensor which senses the amount of the belt which is unrolled.

US6924742B2 discloses a seat belt alarm system which activates an alarm when a child is buckled in a car seat and when the car key is removed from the ignition.

US9545931B1 discloses setting a cruise control speed based on identifying a vehicle operator.

### Summary

According to a first aspect disclosed herein, there is provided a method of activating a child mode in an automobile, the method comprising: determining the presence of an infant carrier on a seat of the automobile by detecting that a seat belt associated with the seat has been unwound from an associated spool by an amount that is greater than a threshold amount; and activating the child mode in the automobile in accordance with a determination that an infant carrier is present on the seat; characterised in that:
the automobile comprises a navigation system for detecting a road on which the automobile is being driven and storing a speed limit associated with the road; and
wherein activating the child mode comprises modifying the stored speed limit associated with the road on which the automobile is detected as being driven.

In an example, detecting that the seat belt has been unwound by an amount that is greater than a threshold amount comprises detecting a number of revolutions of the spool that have occurred as a result of the unwinding of the seat belt, and determining whether the spool has completed a number of revolutions that exceeds a threshold number of revolutions.

In an example, determining the presence of an infant carrier additionally requires that a tongue portion of the seat belt is secured in a corresponding buckle.

In an example, activating the child mode comprises deactivating an airbag associated with the seat such that the airbag does not inflate if the automobile is detected as having undergone a collision.

In an example, activating child mode results in at least one of a reduced maximum speed and a reduced rate of acceleration of the automobile.

In an example, the modified stored speed limit is displayed to the driver of the automobile via a display of the navigation system.

In an example, the method comprises determining whether the automobile is being driven within the modified stored speed limit and sounding an alarm if it is determined that the automobile is exceeding the modified stored speed limit.

In an example, activating the child mode comprises limiting the maximum speed of the automobile such that the driver cannot exceed the modified stored speed limit without performing an operation to deactivate the child mode.

In an example, the navigation system is configured to guide the driver along a first route to a desired destination; and the navigation system determines a second route to the desired destination that is safer than the first route in response to activation of the child mode and guides the driver along the second route to the desired destination.

According to a second aspect disclosed herein there is provided a system for activating a child mode in an automobile, the system comprising: a controller; and a sensor for sensing unwinding of a seat belt in a said automobile and providing an output to the controller; the controller being configured to cause activation of a child mode in a said automobile in the event that it is detected that the seat belt has been unwound from an associated spool by an amount that is greater than a threshold amount; characterised by:
a navigation system for detecting a road on which the automobile is being driven and storing a speed limit associated with the road; and
wherein activating the child mode comprises modifying the stored speed limit associated with the road on which the automobile is detected as being driven.

In an example, the sensor is operable to detect a number of revolutions of the spool that have occurred as a result of the seat belt being unwound from the spool and to provide an output corresponding to the number of revolutions to the controller; the controller being arranged to detect that the seat belt has been unwound from the spool by an amount that is greater than a threshold amount when the detected number of revolutions exceeds a threshold number of revolutions.

In an example, the controller is configured to cause the automobile to operate in child mode by deactivating an airbag associated with a seat of the automobile associated with said seat belt.

There may also be provided an automobile comprising a system as described above.

In an example, the automobile comprises an airbag operable to receive an input from the controller, the input causing deactivation of the airbag.

In an example, the automobile comprises a navigation device, the navigation device being communicatively coupled to the controller, the navigation device being configured to determine a type of road on which the automobile is being driven and to provide the determined road type as an input to the controller; and the controller is configured to receive the determined road type and to determine a speed limit for the determined road type, and wherein the controller is configured to cause the automobile to operate in child mode by limiting a maximum speed of the automobile to be equal to the determined speed limit for the determined road type.

### Brief Description of the Drawings

To assist understanding of the present disclosure and to show how embodiments may be put into effect, reference is made by way of example to the accompanying drawings in which:
Figure 1 shows schematically an example of an infant carrier secured against a seat of an automobile; and
Figure 2 shows schematically an example of a system for activating a child mode in an automobile.

### Detailed Description

As mentioned, automobiles provide for a number of different modes. These modes may be optimized for different types of driving. For example, a sports mode may be optimized for fast-paced driving while an 'eco-mode' may be optimized for fuel-efficient driving. In one type of mode, referred to as child mode, the automobile may be optimized for ensuring the safety of an infant passenger. For example, in a child mode, one or more airbags associated with the seat where an infant (baby) carrier is located may be deactivated so as to prevent the airbag(s) being activated in the case of a collision. As another example, in a child mode, the maximum speed of the automobile may be limited. As another example, particularly in the case of an automobile with an automatic transmission, in a child mode the automobile may be caused to change up gear more quickly (i.e. without revving the engine too high) to prevent excessive acceleration of the automobile.

It is known for example that airbags in automobiles can pose a safety risk to infants (babies) and young children. This is particularly the case where an infant is in an infant carrier as an inflating airbag can result in the infant carrier being lifted and propelled backwards.

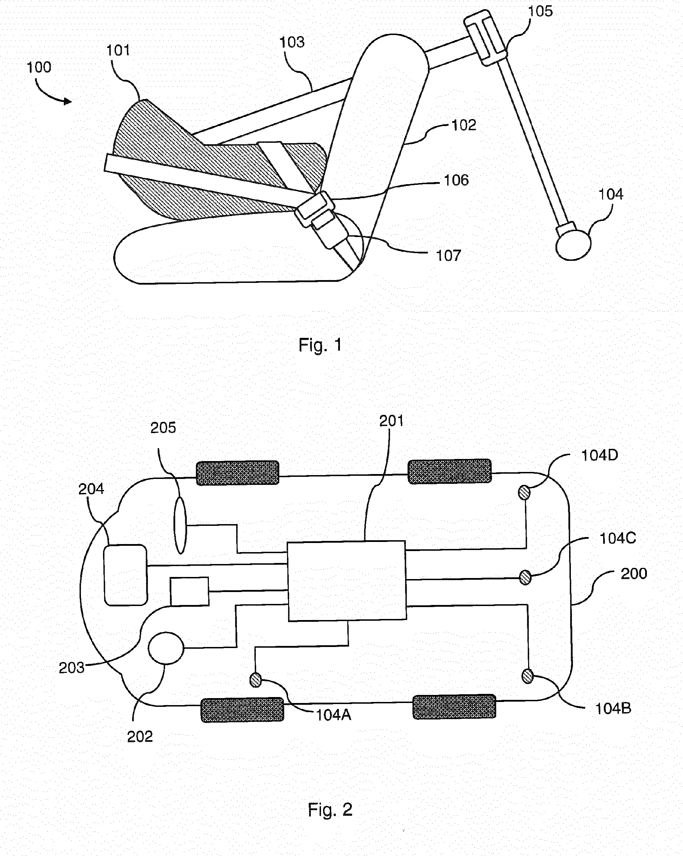

Figure 1 schematically shows an example of an environment 100 in which a child mode may be activated in accordance with the present disclosure. In Figure 1, an infant carrier 101 is shown as being secured to a seat 102 of an automobile. The automobile may be, for example, an automatic or manual car. The infant carrier 101 may include a handle (not shown) for lifting the infant into and out of the automobile. The infant carrier 101 may be secured to any of the passenger seats 102 in the automobile. In a specific example, the infant carrier is secured to a front passenger seat. The infant carrier is secured to the seat 102 via a seat belt 103. The seat belt 103 ensures that the infant carrier 101 remains relatively immobilized and secure whilst the automobile is in motion.

In the example shown in Figure 1, the seat belt 103 is shown as having been drawn from a retractor 104, looped through a pillar loop 105 and wrapped around the infant carrier 101. A tongue portion 106 of the seat belt 103 is secured into a corresponding buckle 107. The fastening of the seat belt 103 in this way secures the infant carrier 101 to the seat 102. Although not shown, it will be appreciated that the infant carrier 101 may include one or more security points, such as wedges or hooks or the like, through which the seat belt 103 can be threaded. These security points ensure that the seat belt 103 remains wrapped around the infant carrier 101.

As can be seen in Figure 1, keeping the infant carrier 101 in place requires the seat belt 103 to be wrapped around and over the infant carrier 101. The length of the seat belt 103 required to perform this wrapping is generally (much) larger than the length of the seat belt that would be required to secure a normal-sized adult to the same seat 102. Thus, by looking at the length of seat belt 103 that has been withdrawn from its associated retractor 104, it is possible to determine whether or not an infant carrier 101 is present on the seat.

Returning to Figure 1, the seat belt 103 is shown as being drawn from a retractor 104. The retractor 104 comprises a spool (not shown) around which the seat belt 103 is wound. When the seat belt 103 is not in use, a larger portion of the seat belt 103 is wound around the spool of the retractor 104. A portion of the seat belt 103 will be external to the spool and will rest against one side of the chair 102. This portion of the seat belt 103 may be held loosely in place by the pillar loop 105. As a passenger pulls the seat belt 103 away from the retractor 104, e.g. across their body or around an infant carrier 101, a larger portion of the seat belt 103 will become unwound from the spool. The amount by which the seat belt 103 has been unwound from the spool can be determined by detecting a number of revolutions of the spool that have occurred as a result of the unwinding. For example, the retractor 104 may be equipped with a sensor for detecting revolutions of the spool. This sensor may include one of a reflective optical sensor, variable reluctance sensor or a Hall Effect sensor, etc.

The number of revolutions detected by the sensor provides an indication of the length of the seat belt 103 that has been unwound from the spool. This in turn is used to determine whether or not an infant carrier 101 is present on the seat 102 associated with the seat belt. For example, an infant carrier may 101 may be detected as present if the number of revolutions detected by the sensor is greater than a threshold number of revolutions. The threshold number may be set, for example, so that it exceeds the number of revolutions that would be expected for securing an adult passenger to the seat 102. In some examples, the infant carrier 101 may only be detected as present on the seat 102 if the seat belt 103 is detected as being secured to the corresponding buckle 107. In these examples, the buckle 107 may be fitted with a corresponding sensor for detecting whether the tongue portion 106 of the seat belt 103 is secured into place.

One advantage of detecting an infant carrier 101 in the manner described above is that the length of the seat belt 103 wrapped around the infant carrier 101 is unlikely to change (at least, appreciably) whilst the automobile is in motion. As a result, the presence of an infant carrier 101 on one of the seats 102 can be determined accurately whilst the automobile is in motion. This differs from known systems which rely on e.g. weight, pressure or tension sensors for detecting the presence of an infant carrier on a seat. As the momentum of the automobile changes in these prior art arrangements, the pressure on the seat or tension against the seat belt is likely to change and therefore affect whether or not an infant is detected as being present on the seat. Hence, known systems lack accuracy in determining whether an infant carrier is present in a moving automobile.

The detection of an infant carrier 101 on one of the seats 102 is used to activate a child mode in the automobile. In an example, if the infant carrier 101 is detected as being present on a front passenger seat of the automobile, then this involves deactivating the airbag associated with the seat. This means that the airbag will not inflate if the automobile is involved in a collision.

However, activating the child mode may not be limited to deactivating an airbag. For example, alternatively or additionally, the manner in which the automobile can be driven may be controlled in response to detecting the presence of an infant carrier 101 on any one of the passenger seats 102.

For example, activation of the child mode may limit the maximum speed that the automobile is able to achieve. The driver may be required to deactivate the child mode before they are able to exceed the maximum speed associated with the child mode. In an example, the maximum speed limit is 90 kph.

Additionally or alternatively, activating the child mode may involve reducing the rate at which the automobile is able to accelerate. For example, the acceleration pedal may be controlled so as to provide additional resistance to the driver's foot. In some examples, the rate of acceleration may be reduced by reducing the sensitivity of the throttle response. If the automobile has an automatic transmission, then the rate of acceleration may be reduced by causing up gear changes to occur more quickly without revving the engine too high. This may be achieved by causing the gear to change up at a lower number of engine revolutions per minute than otherwise when not in child mode. This ensures that the automobile accelerates more steadily or gradually.

In some examples, the automobile may include a navigation system, such as a "satnav", using for example GPS (Global Positioning System) or GLONASS (Global Navigation Satellite System) or the like. The navigation system is configured to determine a type of road on which the automobile is being driven. For example, the navigation system may be able to determine whether the automobile is being driven on an inner city road, country lane, motorway, etc. This may involve, for example, using the navigation system to determine the location of the automobile and determining a road that corresponds to that location. In some examples, the navigation system includes a memory in which speed limits are stored in association with the different road types. The navigation system may include a display for displaying the road that the automobile is detected as being on, along with the associated speed limit. The display may also display a route for the driver to follow in order to reach a desired destination.

In the present disclosure, activating the child mode may result in a modified speed limit being stored in association with the road type that the automobile is determined as being on. For example, a controller (described later) within the automobile may be configured to communicate updated speed limits to the navigation system in response to the child mode being activated. This causes the modified speed limits to be stored in association with the different road types. The modified speed limits correspond to speed limits that have been determined as safer for driving whilst an infant is present in the automobile.

The display of the navigation system may be configured to display the modified speed limit associated with the road that the driver is currently driving on. In some examples, the speed of the automobile may be limited such that the automobile cannot exceed the modified speed limit (at least not without the driver first deactivating the child mode). In other examples, the automobile may be able to exceed the modified speed limit, but in doing so, may cause an alarm to sound from one or more speakers within the automobile. The one or more speakers may be associated with the navigation system or a separate device within the automobile.

In some examples, activating the child mode may cause the navigation system to determine a different route for the driver to take in order to reach a desired destination. For example, the navigation system may be configured to determine a route that is safer than a current route that the driver is currently being guided along by the navigation system. A safer route may be determined, for example, by determining a route that involves fewer roads with higher speed limits and / or roads for which historical data indicates that accidents occur less frequently. A route may also be determined as safer, for example, if it involves fewer country roads (since these are usually of narrow width and are poorly lit at night and are known in general to be more dangerous for road traffic).

Figure 2 schematically illustrates an example of an automobile 200 in which a child mode may be activated. In the example shown in Figure 2, the automobile 200 comprises four passenger seats (not shown), each associated with at least one seat belt 103. The at least one seat belt 103 may be a shoulder seat belt or a lap seat belt. Each seat belt 103 is associated with a respective retractor 104, within which at least some of the seat belt is wound around a spool. In Figure 2, the front passenger seat is shown as being associated with retractor 104A and the three rear passenger seats are shown as being associated with respective retractors 104B - 104D. As described previously, each retractor 104 comprises a spool and an associated sensor. The sensor is configured to detect an amount by which the seat belt 103 has been unwound from an associated spool. This provides an indication of whether or not an infant carrier 101 is present on any of the passenger seats. In some examples, the sensor is configured to detect a number of revolutions of the spool that have occurred as a result of the seat belt 103 being unwound from the spool.

The sensors are communicatively coupled to a controller 201. The controller 201 is configured to activate and deactivate a child mode in the automobile 200. Although the controller 201 is shown as being in the centre of the automobile 200, this is merely for illustration. The controller 201 may be located at any location within the vehicle. In some examples, the controller 201 is located within the dashboard of the automobile 200.

The sensors detect the unwinding of the spool and provide this as an output to the controller 201. The controller 201 is configured to receive this output and to determine whether the seat belt 103 has been unwound from its associated spool by an amount that is greater than a threshold amount. This may involve, for example, comparing the number of revolutions detected by the sensor against a threshold number of revolutions stored in memory at the controller 201. In some examples, this functionality may be performed by the sensor instead of the controller 201. In such a case, the sensor may be configured to instruct the controller 201 to activate the child mode if the sensor determines that the seat belt 103 has been unwound by an amount that exceeds the threshold amount.

In this example, the controller 201 is communicatively coupled to an airbag 202 located in front of the front passenger seat. It will be appreciated that in some examples, the automobile may comprise plural front passenger seats, each with an associated airbag 202. In such a case, the controller is communicatively coupled to each of the airbags 202. The controller is configured to cause the airbag 202 to deactivate if the spool associated with the front passenger seat retractor 104A is detected as having been unwound by an amount that exceeds a threshold amount. This may involve, for example, transmitting an 'OFF' signal to a switch associated with the airbag 202.

In some examples, the sensor associated with the front passenger seat periodically checks the amount by which the seat belt 103 has been unwound from the spool and provides this as input to controller 201. The controller 201 reactivates the airbag 202 if it is determined that an infant carrier 101 is no longer present on the front passenger seat. In some examples, deactivation of the child mode may result in the sounding of an alarm so that the driver is informed of the change. The controller 201 may be connected to one or more speakers (not shown) located in the automobile 200 and cause the one or more speakers to output an alarm sound. This allows the driver to double-check whether the controller 201 is correct in determining that an infant carrier 101 is no longer present on the seat. In some situations, it may also alert the driver that the seat belt 103 is no longer properly wrapped around the infant carrier 101.

The same principles described above may apply to any of the seats of the automobile, particularly seats that have an airbag associated with them. The seat(s) may have airbags in front and/or to the side of the seat, as is known per se.

The controller 201 in this example is also coupled to a navigation device 203. The navigation device 203 may be integrated within the automobile 200 itself, such as within the dashboard. In other examples, the navigation device 203 may be part of a separate device, such as a smartphone. The controller 201 may be configured to activate the child mode in the manner described previously in relation to interactions with the navigation system.

In some examples, the navigation device 203 provides the controller 201 with an indication of the type of road on which the automobile 200 is detected as being driven. The controller 201 receives this as an input and determines a speed limit for the detected road type. This may involve, for example, retrieving a speed limit stored in a memory at the controller 201. The retrieved speed limit corresponds to a speed that is deemed safe for the detected road type, when an infant or young child is present in the automobile 200. The controller 201 provides this speed limit to the navigation device 203. This speed limit may then displayed at a display associated with the navigation device 203.

In some examples, the navigation device 203 may have its own set of road types and corresponding speed limits stored in memory. In such a case, the controller 201 may be configured to modify these speed limits by replacing them with speed limits defined for the child mode. This may involve, for example, transmitting the speed limits defined for the child mode to the navigation device 203. In some examples, the controller 201 may transmit a speed limit that is to be used each time the navigation device 203 detects that the automobile 200 is on a different type of road. The navigation device 203 uses the speed limits received from the controller 201 in place of the official speed limits stored in association with the different road types. If the child mode is deactivated, the controller 201 may inform the navigation device 203 accordingly. The navigation device 203 may then return to using the official speed limit for the detected road type.

The controller 201 is also communicatively coupled to one or more driving components 204. These components 204 are responsible for controlling how the automobile 200 handles whilst it is being driven in the child mode. The one or more driving components 204 may include, for example, the pedals, gearbox, throttle, etc. of the automobile 200. The controller 201 may be configured to activate the child mode by controlling one or more of these components 204. In this way, the controller 201 can control the maximum speed of the automobile 200 and the rate at which it is able to accelerate. The controller may also be coupled to the steering wheel 205. The controller may be configured to activate the child mode by controlling the sensitivity of the steering wheel 205.

In some examples, the controller 201 is configured to determine a speed limit that the automobile 200 is to be driven within and whether or not the automobile 200 is being driven within the speed limit. For example, the controller 201 may receive the type of road that the automobile 200 is detected as being driven on from the navigation device 203. The controller 201 may use this to determine a maximum speed limit for the automobile 200. The controller 201 may receive feedback from the one or more driving components 204 and determine whether or not the driver is keeping within the speed limit. For example, the controller 201 may be linked to a speedometer of the automobile 200. If the controller determines that the automobile 200 is exceeding the speed limit, the controller 201 may cause a sound to alarm via one or more speakers located in the automobile 200.

In other examples, the controller 201 may be configured to control the one or more driving components 204 such that the driver cannot exceed a maximum speed limit. This speed limit may correspond to a generic maximum speed limit or a maximum speed limit associated with the type of road on which the automobile 200 is detected as being driven. The controller 201 may, for example, be configured to limit the flow of fuel to the engine or the power generated by the engine so that the automobile 200 cannot exceed the maximum speed limit. The controller 201 may remove this limitation if the child mode is deactivated.

The steering wheel 205 or dashboard of the automobile 200 may include, for example, a button that the driver can interact with in order to deactivate the child mode. In some examples, the child mode may be deactivated via the driver's voice. For example, one or more microphones may be located within the automobile 200. The audio detected by these microphones may be provided as an input to the controller 201. Speech recognition software may be installed at the controller and be used to determine whether or not the driver has verbally requested deactivation of the child mode. If the controller 201 determines that deactivation has been requested, the controller 201 may re-adjust the driving components (and indeed the airbag, steering wheel and navigational device) to their original settings.

Generally, the child mode will not be deactivated unless the infant carrier 101 is no longer detected as being present on one of the seats 102 of the automobile 200. If for example the seat belt 103 becomes loose from the infant carrier 101 and withdraws back into the retractor 104, this may be detected by the corresponding sensor. For example, the sensor may be configured to determine a direction in which the spool is detected as revolving. If the spool is detected as revolving in a direction that is opposite to the direction associated with unwinding, then the sensor may provide an indication of this to the controller 201. The controller 201 may then alert the driver to this by e.g. sounding an alarm.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of activating a child mode in an automobile (200), the method comprising:
determining the presence of an infant carrier (101) on a seat (102) of the automobile (200) by detecting that a seat belt (103) associated with the seat (102) has been unwound from an associated spool by an amount that is greater than a threshold amount; and
activating the child mode in the automobile (200) in accordance with a determination that an infant carrier (101) is present on the seat; **characterised in that**:
the automobile (200) comprises a navigation system (203) for detecting a road on which the automobile (200) is being driven and storing a speed limit associated with the road; and
wherein activating the child mode comprises modifying the stored speed limit associated with the road on which the automobile (200) is detected as being driven.

2. A method according to claim 1, wherein detecting that the seat belt (103) has been unwound by an amount that is greater than a threshold amount comprises detecting a number of revolutions of the spool that have occurred as a result of the unwinding of the seat belt (103), and determining whether the spool has completed a number of revolutions that exceeds a threshold number of revolutions.

3. A method according to claim 2, wherein determining the presence of an infant carrier additionally requires that a tongue portion (106) of the seat belt (103) is secured in a corresponding buckle (107).

4. A method according to any of claims 1 to 3, wherein activating the child mode comprises deactivating an airbag (202) associated with the seat (102) such that the airbag (202) does not inflate if the automobile (200) is detected as having undergone a collision.

5. A method according to any of claims 1 to 4, wherein activating child mode results in at least one of a reduced maximum speed and a reduced rate of acceleration of the automobile (200).

6. A method according to any of claims 1 to 5, comprising displaying the modified stored speed limit to the driver of the automobile (200) via a display of the navigation system (203).

7. A method according to any of claims 1 to 6, comprising determining whether the automobile (200) is being driven within the modified stored speed limit and sounding an alarm if it is determined that the automobile (200) is exceeding the modified stored speed limit.

8. A method according to any of claims 1 to 7, wherein activating the child mode comprises limiting the maximum speed of the automobile (200) such that the driver cannot exceed the modified stored speed limit without performing an operation to deactivate the child mode.

9. A method according to any of claims 1 to 8, wherein the navigation system (203) is configured to guide the driver along a first route to a desired destination; and
wherein the navigation system (203) determines a second route to the desired destination that is safer than the first route in response to activation of the child mode and guides the driver along the second route to the desired destination.

10. A system for activating a child mode in an automobile (200), the system comprising:
a controller (201); and
a sensor for sensing unwinding of a seat belt (103) in a said automobile (200) and providing an output to the controller (201);
the controller (201) being configured to cause activation of a child mode in a said automobile (200) in the event that it is detected that the seat belt (103) has been unwound from an associated spool by an amount that is greater than a threshold amount; **characterised by**:
a navigation system (203) for detecting a road on which the automobile (200) is being driven and storing a speed limit associated with the road; and
wherein activating the child mode comprises modifying the stored speed limit associated with the road on which the automobile (200) is detected as being driven.

11. A system according to claim 10, wherein the sensor is operable to detect a number of revolutions of the spool that have occurred as a result of the seat belt (103) being unwound from the spool and to provide an output corresponding to the number of revolutions to the controller (201);
the controller (201) being arranged to detect that the seat belt (103) has been unwound from the spool by an amount that is greater than a threshold amount when the detected number of revolutions exceeds a threshold number of revolutions.

12. A system according to claim 10 or claim 11, wherein the controller (201) is configured to cause the automobile (200) to operate in child mode by deactivating an airbag (202) associated with a seat (102) of the automobile (200) associated with said seat belt (103).

13. An automobile (200) comprising a system according to any of claims 10 to 12.

14. An automobile (200) according to claim 13, the automobile (200) comprising an airbag (202) operable to receive an input from the controller (201), the input causing deactivation of the airbag (202).

## Patentansprüche

1. Verfahren zur Aktivierung eines Kindermodus in einem Automobil (200), wobei das Verfahren umfasst:
Bestimmen des Vorhandenseins eines Automobilkindersitzes (101) auf einem Sitz (102) des Automobils (200) durch Erkennen, dass ein Sicherheitsgurt (103), der mit dem Sitz (102) assoziiert ist, von einer assoziierten Rolle um ein Ausmaß, das größer als ein Schwellenausmaß ist, abgerollt wurde; und
Aktivieren des Kindermodus in dem Automobil (200) gemäß einer Bestimmung, dass ein Automobilkindersitz (101) auf dem Sitz vorhanden ist; **dadurch gekennzeichnet, dass**:
das Automobil (200) ein Navigationssystem (203) zum Erkennen einer Straße, auf der das Automobil (200) gefahren wird, und Speichern einer Geschwindigkeitsbegrenzung, die mit der Straße assoziiert ist, umfasst; und
wobei das Aktivieren des Kindermodus ein Modifizieren der gespeicherten Geschwindigkeitsbegrenzung, die mit der Straße assoziiert ist, von der erkannt wird, dass das Automobil (200) darauf gefahren wird, umfasst.

2. Verfahren nach Anspruch 1, wobei das Erkennen, dass der Sicherheitsgurt (103) um ein Ausmaß, das größer als ein Schwellenausmaß ist, abgerollt wurde, ein Erkennen einer Anzahl von Umdrehungen der Rolle, die infolge des Abrollens des Sicherheitsgurts (103) erfolgt sind, und ein Bestimmen, ob die Rolle eine Anzahl von Umdrehungen vollendet hat, die eine Schwellenanzahl von Umdrehungen überschreitet, umfasst.

3. Verfahren nach Anspruch 2, wobei das Bestimmen des Vorhandenseins eines Automobilkindersitzes zusätzlich erfordert, dass ein Verschlussteil (106) des Sicherheitsgurts (103) in einem entsprechenden Gurtschloss (107) gesichert wird.

4. Verfahren nach einem der Ansprüche 1 bis 3, wobei das Aktivieren des Kindermodus ein Deaktivieren eines Airbags (202), der mit dem Sitz (102) assoziiert ist, so dass der Airbag (202) sich nicht entfaltet, wenn erkannt wird, dass das Automobil (200) einen Zusammenstoß hatte, umfasst.

5. Verfahren nach einem der Ansprüche 1 bis 4, wobei das Aktivieren eines Kindermodus zu mindestens einer von einer verringerten Höchstgeschwindigkeit und einer verringerten Beschleunigungsrate des Automobils (200) führt.

6. Verfahren nach einem der Ansprüche 1 bis 5, umfassend ein Anzeigen der modifizierten gespeicherten Geschwindigkeitsbegrenzung für den Fahrer des Automobils (200) mittels einer Anzeige des Navigationssystems (203) .

7. Verfahren nach einem der Ansprüche 1 bis 6, umfassend ein Bestimmen, ob das Automobil (200) innerhalb einer modifizierten gespeicherten Geschwindigkeitsbegrenzung gefahren wird, und ein Auslösen eines Alarms, wenn bestimmt wird, dass das Automobil (200) die modifizierte gespeicherte Geschwindigkeitsbegrenzung überschreitet.

8. Verfahren nach einem der Ansprüche 1 bis 7, wobei das Aktivieren des Kindermodus ein Begrenzen der Höchstgeschwindigkeit des Automobils (200), so dass der Fahrer die modifizierte gespeicherte Geschwindigkeitsbegrenzung nicht überschreiten kann, ohne einen Vorgang zum Deaktivieren des Kindermodus durchzuführen, umfasst.

9. Verfahren nach einem der Ansprüche 1 bis 8, wobei das Navigationssystem (203) dazu konfiguriert ist, den Fahrer entlang einer ersten Route zu einem gewünschten Ziel zu führen; und
wobei das Navigationssystem (203) als Reaktion auf eine Aktivierung des Kindermodus eine zweite Route zu dem gewünschten Ziel bestimmt, die sicherer als die erste Route ist, und den Fahrer entlang der zweiten Route zu dem gewünschten Ziel führt.

10. System zur Aktivierung eines Kindermodus in einem Automobil (200), wobei das System umfasst:
eine Steuereinheit (201) und
einen Sensor zum Erkennen eines Abrollens eines Sicherheitsgurts (103) in dem Automobil (200) und Bereitstellen einer Ausgabe an die Steuereinheit (201);
wobei die Steuereinheit (201) dazu konfiguriert ist, eine Aktivierung eines Kindermodus in dem Automobil (200) in dem Fall zu bewirken, dass erkannt wird, dass der Sicherheitsgurt (103) von einer assoziierten Rolle um ein Ausmaß, das größer als ein Schwellenausmaß ist, abgerollt wurde; **gekennzeichnet durch**:
ein Navigationssystem (203) zum Erkennen einer Straße, auf der das Automobil (200) gefahren wird, und Speichern einer Geschwindigkeitsbegrenzung, die mit der Straße assoziiert ist; und
wobei das Aktivieren des Kindermodus ein Modifizieren der gespeicherten Geschwindigkeitsbegrenzung, die mit der Straße assoziiert ist, von der erkannt wird, dass das Automobil (200) darauf gefahren wird, umfasst.

11. System nach Anspruch 10, wobei der Sensor dazu betreibbar ist, eine Anzahl von Umdrehungen der Rolle, die infolge davon, dass der Sicherheitsgurt (103) von der Rolle abgerollt wird, erfolgt sind, zu erkennen und eine Ausgabe, die der Anzahl von Umdrehungen entspricht, an die Steuereinheit (201) bereitzustellen;
wobei die Steuereinheit (201) dazu eingerichtet ist zu erkennen, dass der Sicherheitsgurt (103) von der Rolle um ein Ausmaß, das größer als ein Schwellenausmaß ist, abgerollt wurde, wenn die erkannte Anzahl von Umdrehungen eine Schwellenanzahl von Umdrehungen überschreitet.

12. System nach Anspruch 10 oder 11, wobei die Steuereinheit (201) dazu konfiguriert ist zu bewirken, dass das Automobil (200) in einem Kindermodus arbeitet, durch Deaktivieren eines Airbags (202), das mit einem Sitz (102) des Automobils (200) assoziiert ist, der mit dem Sicherheitsgurt (103) assoziiert ist.

13. Automobil (200), das ein System nach einem der Ansprüche 10 bis 12 umfasst.

14. Automobil (200) nach Anspruch 13, wobei das Automobil (200) einen Airbag (202) umfasst, der dazu betreibbar ist, eine Eingabe von der Steuereinheit (201) zu empfangen, wobei die Eingabe eine Deaktivierung des Airbags (202) bewirkt.

## Revendications

1. Un procédé permettant d'activer un mode enfant dans une automobile (200), le procédé consistant à :
déterminer la présence d'un porte-bébé (101) sur un siège (102) de l'automobile (200) en détectant qu'une ceinture de sécurité (103) associée au siège (102) a été déroulée d'une bobine associée d'une quantité qui est supérieure à une quantité seuil ; et
activer le mode enfant dans l'automobile (200) conformément à une détermination qu'un porte-bébé (101) est présent sur le siège ; **caractérisé en ce que** :
l'automobile (200) comprend un système de navigation (203) permettant de détecter une route sur laquelle l'automobile (200) est conduite et de stocker une limite de vitesse associée à la route ; et
dans lequel l'activation du mode enfant consiste à modifier la limite de vitesse stockée associée à la route sur laquelle l'automobile (200) est détectée être conduite.

2. Un procédé selon la revendication 1, dans lequel la détection que la ceinture de sécurité (103) a été déroulée d'une quantité qui est supérieure à une quantité seuil consiste à détecter un nombre de tours de la bobine qui ont eu lieu en conséquence du déroulement de la ceinture de sécurité (103) et à déterminer si la bobine a effectué un nombre de tours qui excède un nombre de tours seuil.

3. Un procédé selon la revendication 2, dans lequel la détermination de la présence d'un porte-bébé nécessite en plus qu'une partie languette (106) de la ceinture de sécurité (103) soit fixée dans une boucle correspondante (107).

4. Un procédé selon l'une quelconque des revendications 1 à 3, dans lequel l'activation du mode enfant consiste à désactiver un airbag (202) associé au siège (102) de telle sorte que l'airbag (202) ne se gonfle pas si l'automobile (200) est détectée avoir subie une collision.

5. Un procédé selon l'une quelconque des revendications 1 à 4, dans lequel l'activation du mode enfant se traduit par au moins soit une vitesse maximale réduite, soit un taux d'accélération réduit de l'automobile (200).

6. Un procédé selon l'une quelconque des revendications 1 à 5, consistant en ce que le conducteur de l'automobile (200) visualise la limite de vitesse stockée modifiée par le biais d'un affichage du système de navigation (203).

7. Un procédé selon l'une quelconque des revendications 1 à 6, consistant à déterminer si l'automobile (200) est conduite dans la limite de vitesse stockée modifiée et à faire retentir une alarme s'il est déterminé que l'automobile (200) excède la limite de vitesse stockée modifiée.

8. Un procédé selon l'une quelconque des revendications 1 à 7, dans lequel l'activation du mode enfant consiste à limiter la vitesse maximale de l'automobile (200) de telle sorte que le conducteur ne peut pas excéder la limite de vitesse stockée modifiée sans effectuer une opération pour désactiver le mode enfant.

9. Un procédé selon l'une quelconque des revendications 1 à 8, dans lequel le système de navigation (203) est configuré pour guider le conducteur le long d'un premier itinéraire vers une destination souhaitée ; et
dans lequel le système de navigation (203) détermine un deuxième itinéraire vers la destination souhaitée qui est plus sûr que le premier itinéraire en réponse à l'activation du mode enfant et guide le conducteur le long du deuxième itinéraire vers la destination souhaitée.

10. Un système permettant d'activer un mode enfant dans une automobile (200), le système comprenant :
un dispositif de commande (201) ; et
un capteur permettant de détecter un déroulement d'une ceinture de sécurité (103) dans ladite automobile (200) et de fournir une sortie au dispositif de commande (201) ;
le dispositif de commande (201) étant configuré pour entraîner l'activation d'un mode enfant dans ladite automobile (200) dans le cas où il est détecté que la ceinture de sécurité (103) a été déroulée d'une bobine associée d'une quantité qui est supérieure à une quantité seuil ; **caractérisé par** :
un système de navigation (203) permettant de détecter une route sur laquelle l'automobile (200) est conduite et de stocker une limite de vitesse associée à la route ; et
dans lequel l'activation du mode enfant consiste à modifier la limite de vitesse stockée associée à la route sur laquelle l'automobile (200) est détectée être conduite.

11. Un système selon la revendication 10, dans lequel le capteur peut être utilisé pour détecter un nombre de tours de la bobine qui ont eu lieu en conséquence de la ceinture de sécurité (103) ayant été déroulée de la bobine et pour fournir une sortie correspondant au nombre de tours au dispositif de commande (201) ;
le dispositif de commande (201) étant agencé pour détecter que la ceinture de sécurité (103) a été déroulée de la bobine d'une quantité qui est supérieure à une quantité seuil quand le nombre de tours détecté excède un nombre de tours seuil.

12. Un système selon la revendication 10 ou la revendication 11, dans lequel le dispositif de commande (201) est configuré pour amener l'automobile (200) à fonctionner en mode enfant en désactivant un airbag (202) associé à un siège (102) de l'automobile (200) associé à ladite ceinture de sécurité (103).

13. Une automobile (200) comprenant un système selon l'une quelconque des revendications 10 à 12.

14. Une automobile (200) selon la revendication 13, l'automobile (200) comprenant un airbag (202) pouvant être utilisé pour recevoir une entrée provenant du dispositif de commande (201), ladite entrée entraînant la désactivation de l'airbag (202).
